# EUROPEAN PATENT APPLICATION

(11) **EP 4 664 826 A1**
(43) Date of publication of application: **17.12.2025**
(21) Application number: 25171099.2
(22) Date of filing: 16.04.2025
(51) Int. Cl.: H04L 9/40, H04L 9/06

(54) **PACKET ENCRYPTION METHOD, ELECTRONIC APPARATUS AND NON-TRANSITORY COMPUTER READABLE STORAGE MEDIUM**

(30) Priority: 14.06.2024 US 202418743137
(71) Applicant: HTC Corporation, Taoyuan City 330, (TW)
(72) Inventor: YAO, TUN-HAN, 330 Taoyuan City (TW)
(74) Representative: Schmidbauer, Andreas Konrad

(57) **Abstract**

A packet encryption method includes following steps. A data member of an original data set is transformed into a local bits ring. In response to a local amount of 1-bits or a local amount of 0-bits in the local bits ring being odd, data bits in the local bits ring are shifted along a first direction, so as to generate a shifted data member. In response to the local amount of 1-bits or the local amount of 0-bits in the local bits ring being even, the data bits in the local bits ring are shifted along a second direction different from the first direction, so as to generate the shifted data member. An encrypted data set is generated based on the shifted data member.

## Description

### BACKGROUND

### Field of Invention

The disclosure relates to a packet encryption method. More particularly, the disclosure relates to a packet encryption method to encrypt or decrypt without utilizing a specific encryption keys.

### Description of Related Art

Data packet security is crucial for ensuring the integrity, confidentiality, and authenticity of information transmitted over networks. A data packet is a formatted unit of data carried by a packet-switched network. Securing these packets involves several techniques and protocols designed to protect against various threats like interception, modification, and unauthorized access.

Encryption is a fundamental method used to secure data packets. In some cases, some encryption approaches (e.g., AES-256) utilize encryption keys to encrypt the data, such that the encrypted data will be unreadable to anyone without the correct decryption keys. This ensures confidentiality and prevents eavesdropping.

However, these encryption approaches requires additional computations to encode the original data with encryption keys, and to decode the encrypted data with corresponding decryption keys. In addition, to achieve aforesaid approaches, transmitting terminals and receiving terminals are required to store corresponding encryption/decryption keys. These encryption approaches based on encryption/decryption keys take additional processing time and consume additional computation resource, and not suitable to transmit data packets in a time-sensitive network.

### SUMMARY

The disclosure provides a packet encryption method, which includes following steps. A data member of an original data set is transformed into a local bits ring. In response to a local amount of 1-bits or a local amount of 0-bits in the local bits ring being odd, data bits in the local bits ring are shifted along a first direction, so as to generate a shifted data member. In response to the local amount of 1-bits or the local amount of 0-bits in the local bits ring being even, the data bits in the local bits ring are shifted along a second direction different from the first direction, so as to generate the shifted data member. An encrypted data set is generated based on the shifted data member.

The disclosure also provides an electronic apparatus, which includes a transceiver and a processor. The processor is coupled with the transceiver. The processor is configured to transform a data member of an original data set into a local bits ring. In response to a local amount of 1-bits or a local amount of 0-bits in the local bits ring being odd, the processor is configured to shift data bits in the local bits ring along a first direction, so as to generate a shifted data member. In response to the local amount of 1-bits or the local amount of 0-bits in the local bits ring being even, the processor is configured to shift the data bits in the local bits ring along a second direction different from the first direction, so as to generate the shifted data member. The processor is configured to generate an encrypted data set based on the shifted data member.

The disclosure also provides a non-transitory computer readable storage medium with a computer program to execute aforesaid packet encryption method.

It is to be understood that both the foregoing general description and the following detailed description are demonstrated by examples, and are intended to provide further explanation of the invention as claimed.

### BRIEF DESCRIPTION OF THE DRAWINGS

The disclosure can be more fully understood by reading the following detailed description of the embodiment, with reference made to the accompanying drawings as follows:
FIG. 1 is a schematic diagram illustrating a communication system including an electronic apparatus and another electronic apparatus according to an embodiment of the disclosure.
FIG. 2 is a flow chart illustrating a packet encryption method according to some embodiments of this disclosure.
FIG. 3 is a schematic diagram illustrating the original data set according to some embodiments of this disclosure.
FIG. 4A is a schematic diagram illustrating relative steps of the packet encryption method regarding to the data member in some embodiments.
FIG. 4B is a schematic diagram illustrating relative steps of the packet encryption method regarding to the data member in some embodiments.
FIG. 5 is a schematic diagram illustrating an encrypted data set generated based on the shifted data members according to some embodiments.
FIG. 6 is a flow chart illustrating a packet encryption method according to some embodiments of this disclosure.
FIG. 7 is a schematic diagram illustrating the global bits ring in some embodiments.
FIG. 8 is a schematic diagram illustrating the encrypted data set generated based on the shifted global data in some embodiments.
FIG. 9 is a flow chart illustrating decryption steps within a packet decryption method according to some embodiments of this disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

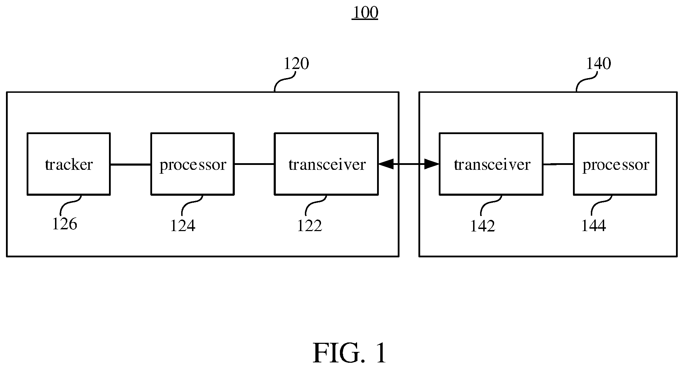

Reference is made to FIG. 1, which is a schematic diagram illustrating a communication system 100 including an electronic apparatus 120 and another electronic apparatus 140 according to an embodiment of the disclosure. The electronic apparatus 120 includes a transceiver 122 and a processor 124. The transceiver 122 of the electronic apparatus 120 is configured to communicate with another transceiver 142 of the electronic apparatus 140.

For example, the electronic apparatus 120 can be a handhold controller, a tracker device or a head-mounted display device. In some embodiments as shown in FIG. 1, the electronic apparatus 120 further includes a tracker 126. The tracker 126 can be configured to generate positioning coordinates of the electronic apparatus 120 (e.g., the handhold controller, the tracker device or the head-mounted display device). The processor 124 may fetch the positioning coordinates from the tracker 126, and the positioning coordinates can be included in an original data set, which can be transmitted through the transceiver 122 to the electronic apparatus 140. In some embodiments, the tracker 126 may include a GPS sensor, an IMU sensor, an optical distance sensor or a camera operating with computer vision or simultaneous localization and mapping (SLAM). It is noticed that the positioning coordinates included in the original data set are examples for demonstrational purpose. The original data set may include other data payload (e.g., control signals, texts, voices, videos or other contents) in other applications. In the meantime, the electronic apparatus 120 is not limited to the handhold controller, the tracker device or the head-mounted display device.

If the data transmitted between the electronic apparatus 120 and the electronic apparatus 140 is not encrypted, the data might be intercepted or wiretapped by a 3^{rd} party. In some embodiments, the electronic apparatus 120 can employ a packet encryption method to encrypt the original data set into an encrypted data set without using an encryption key, and sends the encrypted data set to the electronic apparatus 140. The electronic apparatus 140 is able to decrypt the encrypted data set without using a decryption key and acknowledge the contents of the original data set. In this case, the packet encryption method in the disclosure is able to avoid additional computations involving the encryption/decryption keys and decryption keys. The packet encryption method in the disclosure can reduce a processing time for encryption and is suitable to transmit data in real-time.

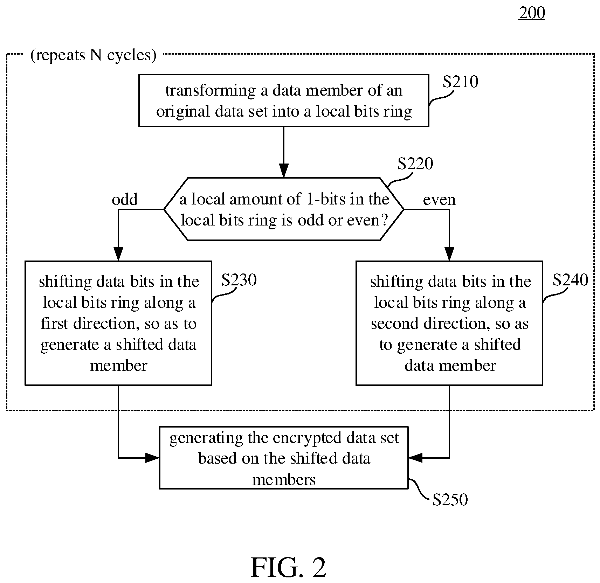

Reference is further made to FIG. 2, which is a flow chart illustrating a packet encryption method 200 according to some embodiments of this disclosure. The packet encryption method 200 in FIG. 2 can be executed by the electronic apparatus 120 shown in FIG. 1.

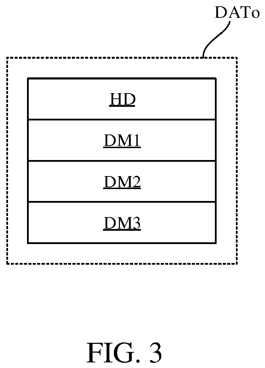

As shown in FIG. 2, step S210 of the packet encryption method 200 is executed, by the processor 124 of the electronic apparatus 120, to transform a data member of the original data set DATo into a local bits ring. Reference is further made to FIG. 3, which is a schematic diagram illustrating the original data set DATo according to some embodiments of this disclosure. As shown in FIG. 3, the original data set DATo includes some data members. In some embodiments, the data members include a data header HD and a data payload. As shown in FIG. 3, the data payload includes data members DM1, DM2 and DM3. The data members DM1, DM2 and DM3 can represent x-coordinate for positioning, y-coordinate for positioning and z-coordinate for positioning. The disclosure is not limited thereto. The original data set DATo is not limited to include three data members DM1, DM2 and DM3 for positioning. In some other embodiments, the original data set DATo may include various amounts of data members for various purposes.

Steps S210, S220, S230 and S240 shown in FIG. 2 can be executed, by the processor 124 of the electronic apparatus 120, to each one of the data members DM1, DM2 and DM3 respectively. In other words, steps S210, S220, S230 and S240 can be repeat N cycles for each data member, and N is a positive integer (in this case shown in FIG. 3, N=3).

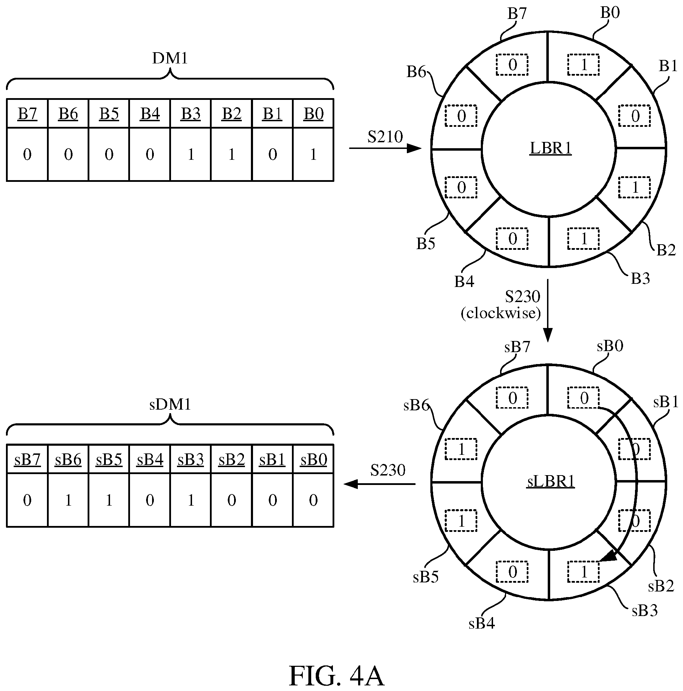

Reference is further made to FIG. 4A, which is a schematic diagram illustrating relative steps of the packet encryption method 200 regarding to the data member DM1 in some embodiments.

As shown in FIG. 4A, it is assumed that the data member DM1 of the original data set DATo include 8 bits B7 to B0 recording "00001101". As shown in FIG. 2 and FIG. 4A, the data member DM1 is transformed into a local bits ring LBR1. In the local bits ring LBR1, the most significant bit (MSB) B7 of the data member DM1 is located adjacent to the least significant bit (LSB) B0 of the data member DM1. In other words, the data member DM1 original in a string structure is transformed into a ring structure as the local bits ring LBR1 shown in FIG. 4A.

As shown in FIG. 2 and FIG. 4A, step S220 is executed to count a local amount of 1-bits in the local bits ring LBR1, and to determine whether the local amount is odd or even. In this case, the local bits ring LBR1 (corresponding to the data member DM1) has three 1-bits and five 0-bits, such that the local amount of 1-bits about the local bits ring LBR1 is determined to be odd.

In aforesaid embodiment as shown in FIG. 2, the local amount of 1-bits in the local bits ring LBR1 is counted and a parity of the local amount is determined based on 1-bits in step S220. However, the disclosure is not limited thereto. It is noticed that, in some other embodiments, step S220 can be executed to count a local amount of 0-bits in the local bits ring LBR1, and to determine whether the local amount of the 0-bits is odd or even.

As shown in FIG. 2 and FIG. 4A, because the local amount of 1-bits in the local bits ring LBR1 is odd, step S230 is executed to shifting data bits in the local bits ring LBR1 along a first direction (e.g., clockwise) into a shifted local bits ring sLBR1, so as to generate a shifted data member sDM1.

To be more specific, a data bit B0 "1" in the local bits ring LBR1 is shifted clockwise, by a shifting distance 3 bits, into a shifted data bit sB3 "1" in the shifted local bits ring sLBR1. Similarly, a data bit B1 "0" in the local bits ring LBR1 is shifted clockwise, by the shifting distance 3 bits, into a shifted data bit sB4 "0" in the shifted local bits ring sLBR1. Similarly, a data bit B2 "1" in the local bits ring LBR1 is shifted clockwise, by the shifting distance 3 bits, into a shifted data bit sB5 "1" in the shifted local bits ring sLBR1. Similarly, a data bit B7 "0" in the local bits ring LBR1 is shifted clockwise, by the shifting distance 3 bits, into a shifted data bit sB2 "0" in the shifted local bits ring sLBR1. In other words, the data bits B0 to B7 in the local bits ring LBR1 are shifted clockwise by 3 bits to form the shifted local bits ring sLBR1.

In this case, the shifted data member sDM1 can be generated according to the shifted local bits ring sLBR1. As shown in FIG. 4A, the shifted data member sDM1 recording "01101000".

In some embodiments, the data bits in the local bits ring LBR1 are shifted by a dynamic distance. In this embodiment shown in FIG. 4A, the dynamic distance is determined according to amount of 1-bits (in this case, the dynamic distance = 3) in the local bits ring LBR1. However, this disclosure is not limited thereto. For example, the dynamic distance can be determined according to amount of 0-bits or a difference between 1-bits and 0-bits.

In other embodiments, in step S230, the data bits B0 to B7 in the local bits ring LBR1 can be shifted by a fixed distance (e.g., 1 bit, 2 bits or 3 bits).

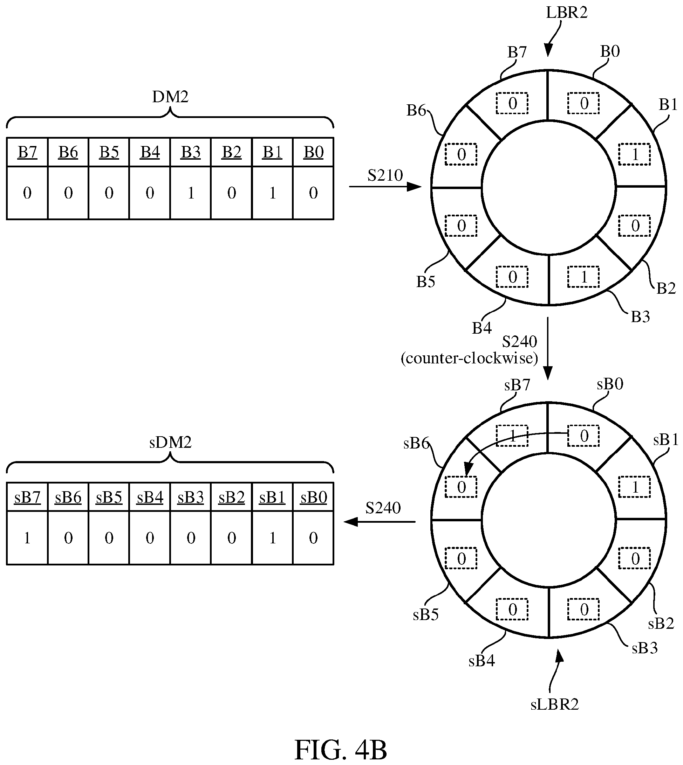

Reference is further made to FIG. 4B, which is a schematic diagram illustrating relative steps of the packet encryption method 200 regarding to the data member DM2 in some embodiments.

As shown in FIG. 4B, it is assumed that the data member DM2 of the original data set DATo include 8 bits B7 to B0 recording "00001010". As shown in FIG. 2 and FIG. 4B, the data member DM2 is transformed into a local bits ring LBR2. In the local bits ring LBR2, the most significant bit (MSB) B7 of the data member DM2 is located adjacent to the least significant bit (LSB) B0 of the data member DM2.

As shown in FIG. 2 and FIG. 4B, step S220 is executed to count a local amount of 1-bits in the local bits ring LBR2, and to determine whether the local amount is odd or even. In this case, the local bits ring LBR2 (corresponding to the data member DM2) has two 1-bits and six 0-bits, such that the local amount of 1-bits about the local bits ring LBR2 is determined to be even.

In aforesaid embodiment as shown in FIG. 2, the local amount of 1-bits in the local bits ring LBR2 is counted and a parity of the local amount is determined based on 1-bits in step S220. However, the disclosure is not limited thereto. It is noticed that, in some other embodiments, step S220 can be executed to count a local amount of 0-bits in the local bits ring LBR2, and to determine whether the local amount of the 0-bits is odd or even.

As shown in FIG. 2 and FIG. 4B, because the local amount of 1-bits in the local bits ring LBR2 is even, step S240 is executed to shifting data bits in the local bits ring LBR2 along a second direction (e.g., the second direction can be counter-clockwise different from the first direction) into a shifted local bits ring sLBR2, so as to generate a shifted data member sDM2.

To be more specific, a data bit B0 "0" in the local bits ring LBR2 is shifted counter-clockwise, by a shifting distance 2 bits, into a shifted data bit sB6 "0" in the shifted local bits ring sLBR2. Similarly, a data bit B1 "1" in the local bits ring LBR2 is shifted counter-clockwise, by the shifting distance 2 bits, into a shifted data bit sB7 "1" in the shifted local bits ring sLBR2. Similarly, a data bit B2 "0" in the local bits ring LBR2 is shifted counter-clockwise, by the shifting distance 2 bits, into a shifted data bit sB0 "0" in the shifted local bits ring sLBR2. Similarly, a data bit B7 "0" in the local bits ring LBR2 is shifted counter-clockwise, by the shifting distance 2 bits, into a shifted data bit sB5 "0" in the shifted local bits ring sLBR2. In other words, the data bits B0 to B7 in the local bits ring LBR2 are counter-shifted clockwise by 2 bits to form the shifted local bits ring sLBR2.

In this case, the shifted data member sDM2 can be generated according to the shifted local bits ring sLBR2. As shown in FIG. 4B, the shifted data member sDM2 recording "10000010".

In some embodiments, the data bits in the local bits ring LBR2 are shifted by a dynamic distance. In this embodiment shown in FIG. 4B, the dynamic distance is determined according to amount of 1-bits (in this case, the dynamic distance = 2) in the local bits ring LBR2. However, this disclosure is not limited thereto. In other embodiments, in step S240, the data bits B0 to B7 in the local bits ring LBR2 can be shifted by a fixed distance (e.g., 1 bit, 2 bits or 3 bits).

Similarly, the steps S210, S220, S230 and S240 can be applied to the data member DM3 of the original data set DATo to generate a corresponding shifted data member.

It is noticed that, the clockwise direction corresponding to the odd amount of 1-bits and the counter-clockwise direction corresponding to the even amount of 1-bits are discussed for demonstration. Alternatively, the packet encryption method 200 can shift in the counter-clockwise direction corresponding to the odd amount of 1-bits and shift in the clockwise direction corresponding to the even amount of 1-bits. In other embodiments, shifting in counter-clockwise/clockwise direction can be determined based on an amount of 0-bits.

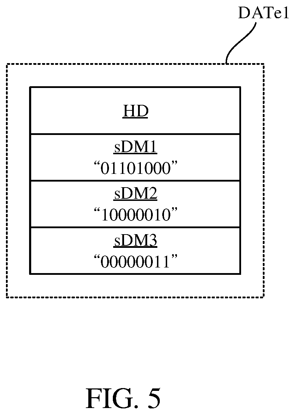

Reference is further made to FIG. 5, which is a schematic diagram illustrating an encrypted data set DATe1 generated based on the shifted data members sDM1, sDM2 and sDM3 according to some embodiments.

As shown in FIG. 2 and FIG. 5, step S250 can be executed, by the processor 124 of the electronic apparatus 120, to generate the encrypted data set DATe1 based on the shifted data member sDM1, sDM2 and sDM3. The encrypted data set DATe1 can be transmitted from the transceiver 122 of the electronic apparatus 120 to the electronic apparatus 140, such that the receiver terminal (i.e., the electronic apparatus 140) can obtain corresponding information.

As shown in FIG. 5, the encrypted data set DATe1 includes the data header HD and the shifted data member sDM1, sDM2 and sDM3. In some embodiments, the data header HD is excluded from being transformed and shifted. In other words, the data bits in the data header HD are processed by steps S210, S220, S230 and S240. In this case, a receiver terminal (e.g., the electronic apparatus 140 in FIG. 1) can recognize and understand contents in the data header HD easily.

In some embodiments, the processor 144 of the electronic apparatus 140 can recognize the shifted data member sDM1, sDM2 and sDM3 in the encrypted data set DATe1, and then shifts data bits in the shifted data member (sDM1, sDM2 or sDM3) along an opposite direction to resume the original contents of the data members DM1, DM2 and DM3 in the original data set DATo.

It is noticed that aforesaid encryption processes on the electronic apparatus 120 are based on amounts of 1-bits (or based on amount of 0-bits) of the data members DM1, DM2 and DM3 without involving an encryption key. The shifted data member sDM1, sDM2 and sDM3 are encrypted by shifting/rotating data bits to different locations in a ring structure. The volume of data bits are not increased due to encryption. The encryption/decryption processes are relatively easier without complex computations. This packet encryption method 200 is suitable to transmit data packets in a time-sensitive network.

In some embodiments, the data members in the original data set DATo may have characteristics that varying data bits of the data members usually gather around to LSB, and data bits of the data members around MSB are usually consecutive zeros. In this case, a 3^{rd} party device may detect a boundary of the data members by locating the consecutive zeros in the original data set DATo. Based on the packet encryption method 200, it can break boundaries of the data members by shifting the data bits in a ring structure. In this case, it will be harder for the 3^{rd} party device to guess/detect the boundary of the data members in the encrypted data set DATe1.

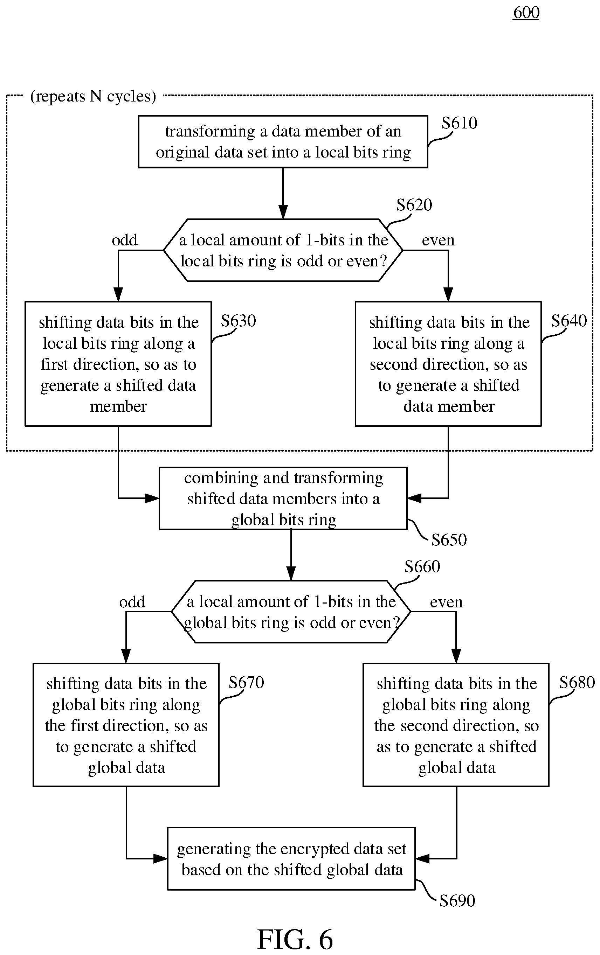

In aforesaid embodiments, the data members DM1, DM2 and DM3 in the original data set DATo are encrypted respectively. However, the disclosure is not limited thereto. Reference is further made to FIG. 6, which is a flow chart illustrating a packet encryption method 600 according to some embodiments of this disclosure. The packet encryption method 600 in FIG. 6 can be executed by the electronic apparatus 120 shown in FIG. 1. Steps S610, S620, S630 and S640 of the packet encryption method 600 as shown in FIG. 6 are similar to the steps S210, S220, S230 and S240 of the packet encryption method 200 as shown in FIG. 2. Details about the steps S610, S620, S630 and S640 can be referred to aforesaid embodiments and are not repeated here again.

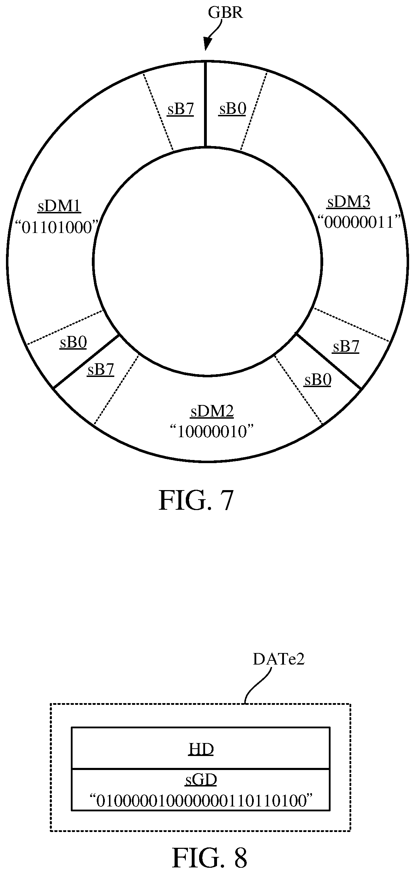

As shown in FIG. 6, after the shifted data members sDM1, sDM2 and sDM3 are generated by steps S630 and S640, step S650 of the packet encryption method 600 can be executed, by the processor 124 of the electronic apparatus 120, to combine the shifted data members sDM1, sDM2 and sDM3 together and transform them into a global bits ring. Reference is further made to FIG. 7, which is a schematic diagram illustrating the global bits ring GBR in some embodiments.

As shown in FIG. 7, the shifted data members sDM1, sDM2 and sDM3 together are linked together to form the global bits ring GBR. In the global bits ring GBR, the most significant bit (MSB) sB7 of the shifted data member sDM1 is located adjacent to the least significant bit (LSB) sB0 of the shifted data member sDM3; the most significant bit (MSB) sB7 of the shifted data member sDM2 is located adjacent to the least significant bit (LSB) sB0 of the shifted data member sDM1; the most significant bit (MSB) sB7 of the shifted data member sDM3 is located adjacent to the least significant bit (LSB) sB0 of the shifted data member sDM2. In other words, the shifted data members sDM1, sDM2 and sDM3 are transformed into a ring structure as the global bits ring GBR shown in FIG. 7.

Afterward, step S660 is executed by the processor 124 of the electronic apparatus 120, to count a global amount of 1-bits in the global bits ring GBR, and to determine whether the global amount is odd or even. In this case, the global bits ring GBR has seven 1-bits and seventeen 0-bits, such that the global amount of 1-bits about the global bits ring GBR is determined to be odd.

In aforesaid embodiment as shown in FIG. 6, the global amount of 1-bits in the global bits ring GBR is counted and a parity of the global amount is determined based on 1-bits in step S660. However, the disclosure is not limited thereto. It is noticed that, in some other embodiments, step S660 can be executed to count a global amount of 0-bits in the global bits ring GBR, and to determine whether the global amount of the 0-bits is odd or even.

In this case, step S670 is executed by the processor 124 of the electronic apparatus 120, to shift the data bits in the global bits ring GBR along the first direction (e.g., clockwise) by a shifting distance 7 bits, so as to generate a shifted global data.

On the other hands, if the global amount of 1-bits in the global bits ring GBR is even (not shown in figures), step S680 can be executed by the processor 124 of the electronic apparatus 120, to shift the data bits in the global bits ring GBR along the second direction (e.g., counter-clockwise), so as to generate another shifted global data (not shown in figures).

Further details about shifting data bits in the global bits ring GBR are similar to the shifting manner in the local bits ring LBR1/LBR2 as discussed in embodiments of FIG. 4A and FIG. 4B. It can be referred to FIG. 4A and FIG. 4B for clockwise shifting and counter-clockwise shifting.

As shown in FIG. 6, step S690 is executed, by the processor 124 of the electronic apparatus 120, to generate an encrypted data set based on the shifted global data. Reference is further made to FIG. 8, which is a schematic diagram illustrating the encrypted data set DATe2 generated based on the shifted global data sGD in some embodiments.

As shown in FIG. 7 and FIG. 8, the global bits ring GBR before shifting include data bits of the shifted data members sDM1, sDM2 and sDM3, which can be "01101000"+ "10000010" + "00000011". In this case, data bits in the global bits ring GBR are shifted along the clockwise direction by 7 bits, such that the shifted global data sGD can be "010000010000000110110100".

As shown in FIG. 8, the encrypted data set DATe2 includes the data header HD and the shifted global data sGD. The encrypted data set DATe2 can be transmitted from the transceiver 122 of the electronic apparatus 120 to the transceiver 142 of the electronic apparatus 140. The processor 144 of the electronic apparatus 140 is able to decode the encrypted data set DATe2 to obtain a decrypted data set (matched with the original data set DATo).

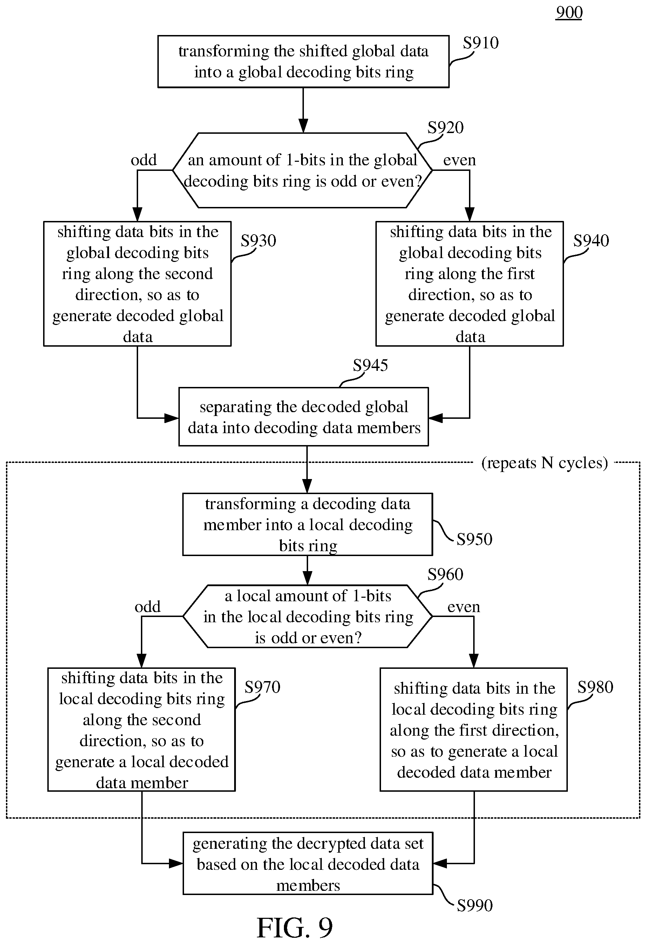

Reference is further made to FIG. 9, which is a flow chart illustrating decryption steps within a packet decryption method 900 according to some embodiments of this disclosure. The packet decryption method 900 shown in FIG. 9 can be executed, by the processor 144 of the electronic apparatus 140 in FIG. 1, to decrypt the encrypted data set DATe2 (referring to FIG. 8) generated by the packet encryption method 600 in FIG. 6. The packet decryption method 900 includes substantially reverse steps relative to the packet encryption method 600 shown in FIG. 6.

As shown in FIG. 9, step S910 is executed, by the processor 144 of the electronic apparatus 140 in FIG. 1, to transform the shifted global data sGD into a global decoding bits ring. Step S920 is executed, by the processor 144 of the electronic apparatus 140 in FIG. 1, to count an amount of 1-bits in the global decoding bits ring. Step S930 or S940 is executed alternatively in response to that the amount of 1-bits in the global decoding bits ring is odd or even, so as to generate a decoded global data. In this case, when the amount of 1-bits in the global decoding bits ring is odd, the global decoding bits ring is shifted along the second direction (e.g. counter-clockwise), to generate the decoded global data; when the amount of 1-bits in the global decoding bits ring is even, the global decoding bits ring is shifted along the first direction (e.g. clockwise), to generate the decoded global data.

Step S945 is executed, by the processor 144 of the electronic apparatus 140 in FIG. 1, to separate the decoded global data into decoding data members.

Each of the decoding data members can be process by steps S950, S960 and S970/S980 respectively.

Step S950 is executed, by the processor 144 of the electronic apparatus 140 in FIG. 1, to transform a decoding data member into a local decoding bits ring. Step S960 is executed, by the processor 144 of the electronic apparatus 140 in FIG. 1, to count a local amount of 1-bits in the local decoding bits ring. Step S970 or S980 is executed, by the processor 144 of the electronic apparatus 140 in FIG. 1, to shift the local decoding bits rings along the second direction or the first direction, so as to generate a local decoded data member.

After the decoding data members are processed through the steps S950, S960 and S970/S980 into the local decoded data members, step S990 is executed, by the processor 144 of the electronic apparatus 140 in FIG. 1, to obtain a decrypted data set based on the decoded data members. In this case, the decrypted data set obtained by the electronic apparatus 140 will match with the original data set DATo on the electronic apparatus 120. In this case, the electronic apparatus 140 is able to decrypt the encrypted data set DATe2 to obtain the decrypted data set without a decryption key. The packet decryption method 900 can be executed based on contents of data bits (e.g., an amount of 1-bits) within the encrypted data set DATe2.

Another embodiment of the disclosure is a non-transitory computer readable storage medium with a computer program to execute the packet encryption method 200 in FIG. 2, the packet encryption method 600 in FIG. 6 or the packet decryption method 900 in FIG. 9.

Although the present invention has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims.

## Claims

1. A packet encryption method, comprising:
transforming a data member of an original data set into a local bits ring;
in response to a local amount of 1-bits or a local amount of 0-bits in the local bits ring being odd, shifting data bits in the local bits ring along a first direction, so as to generate a shifted data member;
in response to the local amount of 1-bits or the local amount of 0-bits in the local bits ring being even, shifting the data bits in the local bits ring along a second direction different from the first direction, so as to generate the shifted data member; and
generating an encrypted data set based on the shifted data member.

2. The packet encryption method according to claim 1, wherein the data member comprises a most significant bit and a least significant bit, the most significant bit and the least significant bit are located adjacent to each other in the local bits ring.

3. The packet encryption method according to claim 1, wherein the data bits in the local bits ring are shifted by a dynamic distance, the dynamic distance is determined according to an amount of 1-bits or 0-bits in the local bits ring.

4. The packet encryption method according to claim 1, wherein the data bits in the local bits ring are shifted by a fixed distance.

5. The packet encryption method according to claim 1, wherein the original data set comprises a data header and a data payload, the data header is excluded from being transformed and shifted, the data payload comprises the data member to be transformed and shifted.

6. The packet encryption method according to claim 1, wherein a plurality of data members of the original data set are transformed respectively into a plurality of local bits rings, the local bits rings are shifted respectively to generate a plurality of shifted data members, the packet encryption method comprises:
combining the shifted data members together and transforming into a global bits ring;
in response to a global amount of 1-bits or a global amount of 0-bits in the global bits ring being odd, shifting data bits in the global bits ring along the first direction, so as to generate a shifted global data;
in response to the global amount of 1-bits or the global amount of 0-bits in the global bits ring being even, shifting the data bits in the global bits ring along the second direction, so as to generate the shifted global data; and
generating the encrypted data set based on the shifted global data.

7. The packet encryption method according to claim 6, further comprising:
transforming the shifted global data into a global decoding bits ring;
shifting the global decoding bits ring, so as to generate a decoded global data;
separating the decoded global data into a plurality of decoding data members;
transforming the decoding data members into a plurality of local decoding bits rings;
shifting the local decoding bits rings, so as to generate a plurality of local decoded data members; and
obtaining a decrypted data set based on the decoded data members.

8. An electronic apparatus, comprising:
a transceiver; and
a processor, coupled with the transceiver, wherein the processor is configured to:
transform a data member of an original data set into a local bits ring;
in response to a local amount of 1-bits or a local amount of 0-bits in the local bits ring being odd, shift data bits in the local bits ring along a first direction, so as to generate a shifted data member;
in response to the local amount of 1-bits or the local amount of 0-bits in the local bits ring being even, shift the data bits in the local bits ring along a second direction different from the first direction, so as to generate the shifted data member; and
generate an encrypted data set based on the shifted data member.

9. The electronic apparatus according to claim 8, wherein the data member comprises a most significant bit and a least significant bit, the most significant bit and the least significant bit are located adjacent to each other in the local bits ring.

10. The electronic apparatus according to claim 8, wherein the data bits in the local bits ring are shifted by a dynamic distance, the dynamic distance is determined according to an amount of 1-bits or 0-bits in the local bits ring.

11. The electronic apparatus according to claim 8, wherein the original data set comprises a data header and a data payload, the data header is excluded from being transformed and shifted, the data payload comprises the data member to be transformed and shifted.

12. The electronic apparatus according to claim 8, wherein a plurality of data members of the original data set are transformed respectively into a plurality of local bits rings, the local bits rings are shifted respectively to generate a plurality of shifted data members, the processor is further configured to:
combine the shifted data members together and transforming into a global bits ring;
in response to a global amount of 1-bits or a global amount of 0-bits in the global bits ring being odd, shift data bits in the global bits ring along a first direction, so as to generate a shifted global data;
in response to the global amount of 1-bits or the global amount of 0-bits in the global bits ring being even, shift the data bits in the global bits ring along a second direction different from the first direction, so as to generate the shifted global data; and
generate the encrypted data set based on the shifted global data.

13. The electronic apparatus according to claim 8, wherein the electronic apparatus is a handhold controller, a tracker device or a head-mounted display device.

14. The electronic apparatus according to claim 13, wherein the original data set comprises positioning coordinates of the handhold controller, the tracker device or the head-mounted display device.

15. A non-transitory computer readable storage medium, with a computer program to execute a packet encryption method, wherein the packet encryption method comprises:
transforming a data member of an original data set into a local bits ring;
in response to a local amount of 1-bits or a local amount of 0-bits in the local bits ring being odd, shifting data bits in the local bits ring along a first direction, so as to generate a shifted data member;
in response to the local amount of 1-bits or the local amount of 0-bits in the local bits ring being even, shifting the data bits in the local bits ring along a second direction different from the first direction, so as to generate the shifted data member; and
generating an encrypted data set based on the shifted data member.
